(19) Europäisches Patentamt / European Patent Office / Office européen des brevets

(11) **EP 2 888 106 B1**

(12) **EUROPÄISCHE PATENTSCHRIFT**

(45) Veröffentlichungstag und Bekanntmachung des Hinweises auf die Patenterteilung:
**27.10.2021   Patentblatt 2021/43**

(51) Int Cl.:
***B32B 17/10*** *(2006.01)*

(21) Anmeldenummer: **13733278.9**

(22) Anmeldetag: **28.06.2013**

(86) Internationale Anmeldenummer:
**PCT/EP2013/063629**

(87) Internationale Veröffentlichungsnummer:
**WO 2014/029536 (27.02.2014 Gazette 2014/09)**

(54) **VERBUNDSCHEIBE MIT ELEKTRISCH SCHALTBAREN OPTISCHEN EIGENSCHAFTEN**

COMPOUND GLAZING WITH ELECTRICALLY SWITCHABLE OPTICAL PROPERTIES

PLAQUE COMPOSITE DOTÉE DE PROPRIÉTÉS OPTIQUES COMMUTABLES ÉLECTRIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2012   EP 12181122**

(43) Veröffentlichungstag der Anmeldung:
**01.07.2015   Patentblatt 2015/27**

(73) Patentinhaber: **SAINT-GOBAIN GLASS FRANCE
92400 Courbevoie (FR)**

(72) Erfinder:
- **MENNIG, Julius
  52070 Aachen (DE)**
- **PENNERS, Franz
  52525 Heinsberg (DE)**

(74) Vertreter: **Gebauer, Dieter Edmund
  Splanemann
  Patentanwälte Partnerschaft
  Rumfordstraße 7
  80469 München (DE)**

(56) Entgegenhaltungen:
**WO-A1-2009/061329    WO-A1-2012/154663
DE-T2- 68 924 853    DE-T2- 69 820 012
US-A- 5 408 353    US-A- 6 034 813
US-A- 6 055 088    US-A1- 2009 219 468
US-A1- 2012 176 656**

**Beschreibung**

Die Erfindung betrifft eine Verbundscheibe mit elektrisch schaltbaren optischen Eigenschaften, und ein Verfahren zu deren Herstellung.

Es sind Verglasungen mit elektrisch schaltbaren Funktionselementen bekannt. Die optischen Eigenschaften der Funktionselemente können durch eine angelegte Spannung verändert werden. Ein Beispiel hierfür sind elektrochrome Funktionselemente, die beispielsweise aus US 20120026573 A1 und WO 2012007334 A1 bekannt sind. Ein weiteres Beispiel sind SPD-Funktionselemente (suspended particle device), die beispielsweise aus EP 0876608 B1 und WO 2011033313 A1 bekannt sind. Durch die angelegte Spannung lässt sich die Transmission von sichtbarem Licht durch elektrochrome oder SPD-Funktionselemente steuern. Verglasungen mit solchen Funktionselementen können also auf komfortable Weise elektrisch abgedunkelt werden.

Viele schaltbare Funktionselemente weisen eine begrenzte Langzeitstabilität auf. Das gilt insbesondere für Funktionselemente in Verglasungen im Außenbereich, beispielsweise in Gebäudefassaden oder im Fahrzeugbereich, wo die Funktionselemente der Sonnenstrahlung ausgesetzt sind. Insbesondere der infrarote Spektralanteil der Sonnenstrahlung führt zu einer Alterung der Funktionselemente. Die Alterung kann sich beispielsweise in einer unästhetischen Verfärbung der Funktionselemente äußern, welche homogen oder auch inhomogen sein kann. Die Alterung kann aber auch zu einer Verschlechterung der Funktionalität des schaltbaren Funktionselementes führen, insbesondere zu einem verringerten Kontrast zwischen den Schaltzuständen.

In WO 2007122426 A1 wird daher vorgeschlagen, das Funktionselement innerhalb einer Verbundscheibe durch eine Schutzbeschichtung vor Infrarotstrahlung zu schützen. Die Schutzbeschichtung enthält bevorzugt ein oder zwei funktionelle Silberschichten, durch welche infrarote Strahlung reflektiert wird. Schutzbeschichtungen mit einer oder zwei Silberschichten weisen aber eine hohe Transmission im nahen Infrarotbereich auf. Die Schädigung des Funktionselementes durch eine solche Schutzbeschichtung kann daher zwar reduziert, aber nicht gänzlich vermieden werden. WO 2009061329 und WO 2012154663 zeigen jeweils eine Verbundscheibe, bei der eine IR-Schutzbeschichtung zwischen der Außenscheibe und einer aktiven Schicht angeordnet ist. US 5408353 A beschreibt die Möglichkeit, die Funktion einer Flächenelektrode und IR-Schutzfunktion zu kombinieren.

Die Aufgabe der vorliegenden Erfindung ist es, eine Verbundscheibe mit elektrisch schaltbaren optischen Eigenschaften bereitzustellen, welche einen verbesserten Schutz des schaltbaren Funktionselements gegen Infrarotstrahlung aufweist.

Die Aufgabe der vorliegenden Erfindung wird erfindungsgemäß durch eine Verbundscheibe mit elektrisch schaltbaren optischen Eigenschaften gemäß dem unabhängigen Anspruch 1 gelöst. Bevorzugte Ausführungen gehen aus den Unteransprüchen hervor.

Die erfindungsgemäße Verbundscheibe mit elektrisch schaltbaren optischen Eigenschaften umfasst zumindest die folgenden Merkmale:

- eine Außenscheibe und eine Innenscheibe, die über eine Zwischenschicht flächenmäßig miteinander verbunden sind,
- innerhalb der Zwischenschicht ein schaltbares Funktionselement mit mindestens einer aktiven Schicht und
- eine Infrarot-Schutzbeschichtung flächenmäßig zwischen der Außenscheibe und der aktiven Schicht angeordnet,

wobei die Infrarot-Schutzbeschichtung mindestens drei funktionelle Schichten mit reflektierenden Eigenschaften für den Infrarotbereich enthält.

Die erfindungsgemäße Verbundscheibe ist bevorzugt dafür vorgesehen, in einer Öffnung, beispielsweise eines Fahrzeugs oder eines Gebäudes, den Innenraum gegenüber der äußeren Umgebung abzutrennen. Mit Außenscheibe wird im Sinne der Erfindung diejenige Scheibe bezeichnet, die in Einbaulage der äußeren Umgebung zugewandt ist. Mit Innenscheibe wird diejenige Scheibe bezeichnet, die in Einbaulage dem Innenraum zugewandt ist. Prinzipiell kann die erfindungsgemäße Verbundscheibe natürlich auch im Inneren eines Gebäudes eingesetzt werden, insbesondere wenn dort ein Schutz gegenüber infraroter Strahlung erforderlich ist. Die Außenscheibe ist dann diejenige Scheibe, welche der Infrarot-Strahlungsquelle zugewandt ist.

Enthält ein Element zumindest ein Material, so schließt dies im Sinne der Erfindung den Fall ein, dass das Element aus dem Material besteht.

Unter einer Verbundscheibe mit elektrisch schaltbaren optischen Eigenschaften wird im Sinne der Erfindung nicht nur eine Verbundscheibe bezeichnet, deren optische Eigenschaften, beispielsweise die Transmission von sichtbarem Licht, zwischen zwei diskreten Zuständen geschaltet werden können, beispielsweise einem opaken und einem transparenten Zustand. Es sind darunter auch solche Verbundscheiben zu verstehen, deren optische Eigenschaften stufenlos regelbar sind.

Die Infrarot-Schutzbeschichtung ist erfindungsgemäß flächenmäßig zwischen der Außenscheibe und der aktiven Schicht angeordnet. Von der äußeren Umgebung durch die Verbundscheibe tretendes Sonnenlicht trifft also zunächst auf die Infrarot-Schutzbeschichtung und anschließend auf das Funktionselement. Der infrarote Strahlungsanteil des Sonnenlichts wird durch die Infrarot-Schutzbeschichtung reflektiert und / oder absorbiert und trifft daher nicht (oder nur in deutlichem verringertem Maße) auf das Funktionselement. Der große Vorteil der Erfindung liegt in der erfindungsgemäß ausgebildeten Infrarot-Schutzbeschichtung mit zumindest drei funktionellen Schichten. Eine solche Infrarot-Schutzbeschichtung weist eine hohe Transmission im sichtbaren Spektralbereich auf, aber bereits im an den sichtbaren Spektralbereich angrenzenden Nah-Infrarotbereich einen hohen Reflexionsgrad. Das Funktionselement wird durch die erfindungsgemäße Infrarot-Schutzbeschichtung besonders wirksam vor infraroten Strahlungsanteilen geschützt, ohne dass die Transparenz der Verbundscheibe im sichtbaren Spektralbereich störend herabgesetzt wird. Durch die Anordnung zwischen aktiver Schicht und Außenscheibe ist die Infrarot-Schutzbeschichtung im Inneren der Verbundscheibe vorteilhaft vor Beschädigung und Korrosion geschützt.

Natürlich kann die Verbundscheibe auch mehr als eine erfindungsgemäße Infrarot-Schutzbeschichtung aufweisen. Zumindest eine Infrarot-Schutzbeschichtung muss erfindungsgemäß zwischen der aktiven Schicht des Funktionselements und der Außenscheibe angeordnet sein. Beispielsweise kann eine weitere Infrarot-Schutzbeschichtung zwischen der aktiven Schicht und der Innenscheibe angeordnet sein.

Das elektrisch schaltbare Funktionselement umfasst zumindest eine aktive Schicht, welche die schaltbaren optischen Eigenschaften aufweist. Die aktive Schicht ist flächenmäßig zwischen einer äußeren und einer inneren transparenten Flächenelektrode angeordnet. Die äußere Flächenelektrode ist dabei der Außenscheibe zugewandt und die innere Flächenelektrode ist der Innenscheibe zugewandt. Die Flächenelektroden und die aktive Schicht sind typischerweise parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Das schaltbare Funktionselement ist in die Zwischenschicht der erfindungsgemäßen Verbundscheibe eingelagert. Über die Zwischenschicht sind die Außenscheibe und die Innenscheibe dauerhaft stabil durch Lamination miteinander verbunden. Die Zwischenschicht enthält zumindest eine thermoplastische Klebefolie. Die thermoplastische Klebefolie enthält zumindest ein thermoplastisches Polymer, bevorzugt Ethylenvinylacetat (EVA) und / oder Polyvinylbutyral (PVB). Damit wird eine besonders vorteilhafte Verbindung der Zwischenschicht zur Außenscheibe und zur Innenscheibe erreicht. Die thermoplastischen Klebefolie kann aber auch beispielsweise zumindest Polyurethan, Polyethylen, Polyethylenterephthalat, Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und / oder Ethylen-Tetrafluorethylen enthalten. Die Dicke der thermoplastischen Klebefolie beträgt bevorzugt von 0,25 mm bis 1 mm, beispielsweise 0,38 mm oder 0,76 mm.

Erfindungsgemäß ist das Funktionselement flächenmäßig zwischen zumindest zwei thermoplastischen Klebefolien angeordnet. Das Funktionselement ist dabei über zumindest eine erste thermoplastische Klebefolie mit der Außenscheibe und über zumindest eine zweite thermoplastische Klebefolie mit der Innenscheibe verbunden. Die erste und die zweite thermoplastische Klebefolie stehen dabei mit der Außenscheibe beziehungsweise der Innenscheibe in Kontakt und bewirken die Verklebung des Funktionselementes mit der Außenscheibe und der Innenscheibe zur Verbundscheibe.

Erfindungsgemäß wird das Funktionselement bei der Herstellung der Verbundscheibe als prälaminiertes Folien-Funktionselement bereitgestellt. Bei einem solchen prälaminierten Funktionselement ist das eigentliche Funktionselement flächenmäßig zwischen zumindest einer ersten und zumindest einer zweiten Trägerfolie angeordnet. Die erste Trägerfolie ist bevorzugt zumindest über eine erste thermoplastische

Klebefolie mit der Außenscheibe und die zweite Trägerfolie über zumindest eine zweite thermoplastische Klebefolie mit der Innenscheibe verbunden. Die Zwischenschicht umfasst dann mit wachsendem Abstand zur Außenscheibe zumindest die erste thermoplastische Klebefolie, die erste Trägerfolie, die äußere Flächenelektrode, die aktive Schicht, die innere Flächenelektrode, die zweite Trägerfolie und die zweite thermoplastische Klebefolie. Der Vorteil liegt in einer einfachen Herstellung der Verbundscheibe. Das prälaminierte Funktionselement kann bei der Herstellung einfach in den Verbund eingelegt werden, welcher dann mit herkömmlichen Verfahren zur Verbundscheibe laminiert wird. Das Funktionselement ist durch die Trägerfolien vorteilhaft vor Beschädigung, insbesondere Korrosion geschützt und kann vor der Herstellung der Verbundscheibe auch in größerer Stückzahl bereitgestellt werden, was aus ökonomischen und verfahrenstechnischen Gründen wünschenswert sein kann.

Die Trägerfolien enthalten bevorzugt zumindest ein thermoplastisches Polymer, besonders bevorzugt Polyethylenterephthalat (PET). Das ist besonders vorteilhaft im Hinblick auf die Stabilität des prälaminierten Funktionselements. Die Trägerfolien können aber auch beispielsweise Ethylenvinylacetat (EVA) und / oder Polyvinylbutyral (PVB), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und / oder Ethylen-Tetrafluorethylen enthalten. Die Dicke jeder Trägerfolie beträgt bevorzugt von 0,1 mm bis 1 mm, besonders bevorzugt von 0,1 mm bis 0,2 mm. Durch eine Trägerfolie mit einer solchen geringen Dicke wird die Gesamtdicke der Verbundscheibe nur unwesentlich erhöht. Gemäß der Erfindung enthält das Funktionselement eine äußere Flächenelektrode und eine innere Flächenelektrode, zwischen denen die aktive Schicht flächenmäßig angeordnet ist, wobei das Funktionselement flächenmäßig zwischen einer ersten Trägerfolie und einer zweiten Trägerfolie angeordnet ist und wobei die erste Trägerfolie zumindest über eine erste thermoplastische Klebefolie mit der Außenscheibe und die zweite Trägerfolie über zumindest eine zweite thermoplastische Klebefolie mit der Innenscheibe verbunden ist.

Gemäß der Erfindung ist die Infrarot-Schutzbeschichtung auf der ersten Trägerfolie eines prälaminierten Funktionselementes aufgebracht. Das Funktionselement kann dann verfahrenstechnisch vorteilhaft zusammen mit der Infrarot-Schutzbeschichtung bereitgestellt werden. Ein vorher bereitgestelltes, eventuell kommerziell erworbenes prälaminiertes Funktionselement kann vor der Herstellung der Verbundscheibe mit der Infrarotbeschichtung versehen werden. Das Funktionselement enthält eine äußere Flächenelektrode und eine innere Flächenelektrode, zwischen denen die aktive Schicht flächenmäßig angeordnet ist. Erfindungsgemäß ist die Infrarot-Schutzbeschichtung auf der zum Funktionselement hingewandten Oberfläche der Trägerschicht angeordnet. Die Infrarot-Schutzbeschichtung ist dann bereits vor der Herstellung der Verbundscheibe vorteilhaft im Inneren des prälaminierten Funktionselements vor Beschädigungen und Korrosion geschützt. Ein weiterer Vorteil besteht darin, dass die Infrarot-Schutzbeschichtung gleichzeitig als Flächenelektrode fungieren kann, sofern sie eine ausreichende elektrische Leitfähigkeit aufweist.

Gemäß der Erfindung ist die Infrarot-Schutzbeschichtung auf der zur aktiven Schicht hingewandten Oberfläche der ersten Trägerfolie aufgebracht und die Infrarot-Schutzbeschichtung ist die äußere Flächenelektrode. Das Funktionselement enthält die Infrarot-Schutzbeschichtung als äußere Flächenelektrode und eine innere Flächenelektrode, zwischen denen die aktive Schicht flächenmäßig angeordnet ist. Die Infrarot-Schutzbeschichtung ist elektrisch kontaktiert, bevorzugt mittel zumindest eines geeigneten Kabels und gegebenenfalls eines Sammelleiters, und mit der externen Spannungsquelle verbunden. Der besondere Vorteil liegt in einer einfacheren Herstellung der Verbundscheibe, wenn die Infrarot-Schutzbeschichtung und die äußere Flächenelektrode durch das gleiche Element realisiert sind und nicht als verschiedene Elemente in die Verbundscheibe eingebracht werden müssen.

Der erfinderische Gedanke, die Infrarot-Schutzbeschichtung als äußere Flächenelektrode zu verwenden, ist grundsätzlich nicht auf Infrarot-Schutzbeschichtungen mit mindestens drei funktionellen Schichten beschränkt. Er kann beispielsweise auch durch Infrarot-Schutzbeschichtungen mit zumindest zwei funktionellen Schichten mit reflektierenden Eigenschaften für den Infrarot-Bereich realisiert werden, beispielsweise zwei oder drei funktionelle Schichten.

Die Infrarot-Schutzbeschichtung kann vollflächig auf die Oberfläche der ersten Trägerfolie der Zwischenschicht aufgebracht sein. Dann entspricht die Fläche der Infrarot-Schutzbeschichtung der Fläche der Verbundscheibe. Die Verbundscheibe kann aber auch einen Randbereich mit einer Breite von beispielsweise von 3 mm bis 50 mm aufweisen, der nicht mit der Infrarot-Schutzbeschichtung versehen ist. Dann hat die Infrarot-Schutzbeschichtung keinen Kontakt zur äußeren Atmosphäre und ist vorteilhaft im Inneren der Verbundscheibe vor Korrosion geschützt.

Die funktionellen Schichten der erfindungsgemäßen Infrarot-Schutzbeschichtung sind bevorzugt metallisch und enthalten zumindest ein Metall, beispielsweise Silber, Gold, Kupfer, Nickel und / oder Chrom, oder eine Metalllegierung. Die funktionellen Schichten enthalten ganz besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionellen Schichten weisen ein

besonders vorteilhaftes Reflexionsvermögen im Infrarotbereich bei gleichzeitiger hoher Transmission im sichtbaren Spektralbereich auf.

Jede funktionelle Schicht der erfindungsgemäßen Infrarot-Schutzbeschichtung weist bevorzugt eine Dicke von 5 nm bis 50 nm, besonders bevorzugt von 8 nm bis 25 nm und ganz besonders bevorzugt von 10 nm bis 20 nm auf. In diesem Bereich für die Dicke der funktionellen Schicht wird eine vorteilhaft hohe Transmission im sichtbaren Spektralbereich und ein besonders vorteilhafter Reflexionsgrad im Infrarotbereich erreicht.

Die erfindungsgemäße Infrarot-Schutzbeschichtung kann mehr als drei funktionelle Schichten enthalten, beispielsweise vier oder fünf funktionelle Schichten. Bevorzugt enthält die Infrarot-Schutzbeschichtung genau drei funktionelle Schichten. Infrarot-Schutzbeschichtungen mit drei funktionellen Schichten sind einfacher herzustellen als Infrarot-Beschichtungen mit mehr als drei funktionellen Schichten. Es hat sich gezeigt, dass Infrarot-Schutzbeschichtung mit genau drei funktionellen Schichten einen effektiven Schutz des Funktionselements vor Infrarotstrahlung bei hoher Transmission im sichtbaren Spektralbereich ermöglichen.

In einer vorteilhaften Ausgestaltung ist jeweils zwischen zwei benachbarten funktionellen Schichten der Infrarot-Schutzbeschichtung zumindest eine dielektrische Schicht angeordnet. Zwei funktionelle Schichten gelten dann als benachbart, wenn zwischen ihnen keine weitere funktionelle Schicht angeordnet ist. Bevorzugt ist unterhalb der ersten funktionellen Schicht eine weitere dielektrische Schicht angeordnet. Die erste funktionelle Schicht ist dabei diejenige der zumindest drei funktionellen Schichten, welche den geringsten Abstand zu der Oberfläche aufweist, auf welche die Infrarot-Schutzbeschichtung aufgebracht ist. Eine Schicht ist dann unterhalb einer anderen Schicht angeordnet, wenn sie einen geringeren Abstand zu der besagten Oberfläche aufweist als die andere Schicht. Bevorzugt ist oberhalb der letzten funktionellen Schicht eine weitere dielektrische Schicht angeordnet. Die letzte funktionelle Schicht ist dabei diejenige der zumindest drei funktionellen Schichten, welche den größten Abstand zu der Oberfläche aufweist, auf welche die Infrarot-Schutzbeschichtung aufgebracht ist. Eine Schicht ist dann oberhalb einer anderen Schicht angeordnet, wenn sie einen größeren Abstand zu der besagten Oberfläche aufweist als die andere Schicht.

Die Infrarot-Schutzbeschichtung umfasst also in einer besonders bevorzugten Ausgestaltung n funktionelle Schichten und (n+1) dielektrische Schichten, wobei die funktionellen Schichten und die dielektrischen Schichten alternierend aufgebracht sind, so dass jede funktionelle Schicht zwischen zwei dielektrischen Schichten angeordnet ist. n ist dabei eine ganze Zahl. Das ist besonders vorteilhaft im Hinblick auf die optischen Eigenschaften der Verbundscheibe sowie die Reflexionseigenschaften im Infrarotbereich. Durch die dielektrischen Schichten kann die Infrarot-Schutzbeschichtung insbesondere mit antireflektierenden Eigenschaften im sichtbaren Spektralbereich versehen werden, wodurch die Transmission verbessert wird.

Jede dielektrische Schicht enthält zumindest eine Einzelschicht aus einem dielektrischen Material. Eine dielektrische Schicht kann aus einer Einzelschicht aus einem dielektrischen Material bestehen. Die Einzelschicht aus einem dielektrischen Material enthält bevorzugt zumindest ein Oxid (beispielsweise Zinnoxid, Zinkoxid, Aluminiumoxid, Titanoxid, Siliziumoxid, Manganoxid, Wolframoxid, Nioboxid oder Wismutoxid) und / oder zumindest ein Nitrid (beispielsweise Siliziumnitrid, Zirkoniumnitrid oder Aluminiumnitrid). Die Einzelschicht aus einem dielektrischen Material enthält besonders bevorzugt Siliziumnitrid. Damit werden besonders gute Ergebnisse hinsichtlich der optischen Eigenschaften der Infrarot-Schutzbeschichtung erzielt. Die Einzelschicht aus einem dielektrischen Material kann auch Dotierungen aufweisen, beispielsweise Aluminium, Zirkonium und / oder Bor.

Jede Einzelschicht aus einem dielektrischen Material weist bevorzugt eine Dicke von 10 nm bis 100 nm, besonders bevorzugt von 20 nm bis 70 nm auf. Das ist besonders vorteilhaft im Hinblick auf die optischen Eigenschaften der Verbundscheibe.

Eine oder mehrere der dielektrischen Schichten können aber auch mehr als eine Einzelschicht enthalten. Die dielektrische Schicht kann beispielsweise neben der besagten Einzelschicht aus einem dielektrischen Material zumindest eine Glättungsschicht enthalten. Die Glättungsschicht bewirkt eine Glättung der Oberfläche der oberhalb der Glättungsschicht aufgebrachten Schichten. Dadurch wird eine höhere Transmission in sichtbaren Spektralbereich erreicht. Die Glättungsschicht kann beispielsweise ein nichtkristallines (also amorphes oder teilamorphes) Oxid enthalten. Besonders geeignet sind Oxide eines oder mehrerer der Elemente Zinn, Silizium, Titan, Zirkonium, Hafnium, Zink, Gallium und Indium, beispielsweise Zinn-Zink-Mischoxid. Die Glättungsschicht kann beispielsweise eine Dicke von 3 nm bis 20 nm aufweisen. Die dielektrische Schicht kann beispielsweise neben der besagten Einzelschicht aus einem dielektrischen Material auch zumindest eine Anpassungsschicht enthalten, welche beispielsweise Zinkoxid enthält und beispielsweise eine Dicke von 3 nm bis 20 nm. Durch Anpassungsschichten werden die optischen Eigenschaften der Verbundscheibe weiter verbessert.

Die Infrarot-Schutzbeschichtung ist in einer vorteilhaften Ausgestaltung getempert. Dazu wird die Infrarot-Schutzbeschichtung einer Temperaturbehandlung unterzogen. Die Infrarot-Schutzbeschichtung wird dabei bevorzugt auf eine Temperatur von mindestens 200°C, besonders bevorzugt mindestens 300°C erhitzt. Eine solche Temperaturbehandlung beeinflusst insbesondere die Kristallinität insbesondere der funktionellen Schicht und führt zu einer verbesserten Transmission im sichtbaren Spektralbereich. Ist die Infrarot-Schutzbeschichtung auf der Außenscheibe einer gebogenen Verbundscheibe aufgebracht, so kann die Temperaturbehandlung im Rahmen des Biegeprozesses der Außenscheibe erfolgen, der typischerweise bei erhöhten Temperaturen von beispielsweise 500°C bis 700°C ausgeführt wird.

Das Funktionselement kann prinzipiell jedes elektrisch schaltbare, dem Fachmann an sich bekannte Funktionselement sein. Die Erfindung ist natürlich insbesondere in Verbindung mit solchen Funktionselementen vorteilhaft, die unter Bestrahlung mit infraroter Strahlung altern.

In einer vorteilhaften Ausgestaltung der Erfindung ist die aktive Schicht des Funktionselements eine elektrochemisch aktive Schicht. Solche Funktionselemente sind als elektrochrome Funktionselemente bekannt. Die Transmission von sichtbarem Licht ist vom Einlagerungsgrad von Ionen in die aktive Schicht abhängig, wobei die Ionen beispielsweise durch eine Ionenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

In einer weiteren vorteilhaften Ausgestaltung der Erfindung enthält die aktive Schicht des Funktionselements Flüssigkristalle, welche beispielsweise in eine Polymermatrix eingelagert sind. Solche Funktionselemente sind als PDLC-Funktionselemente (Polymer dispersed liquid crystal) bekannt. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt.

In einer weiteren vorteilhaften Ausgestaltung der Erfindung ist das Funktionselement ein elektrolumineszentes Funktionselement. Dabei enthält die aktive Schicht elektrolumineszente Materialen, welche anorganisch oder organisch (OLED) sein können. Durch Anlegen einer Spannung an die Flächenelektroden wird die Lumineszenz der aktiven Schicht angeregt. Solche Funktionselemente sind beispielsweise aus US 2004227462 A1 und WO 2010112789 A2 bekannt.

In einer weiteren vorteilhaften Ausgestaltung der Erfindung enthält die aktive Schicht des Funktionselements suspendierte Partikel, wobei die Absorption von Licht durch die aktive Schicht mittels Anlegen einer Spannung an die Flächenelektroden veränderbar ist. Solche Funktionselemente sind als SPD-Funktionselemente (suspended particle device) bekannt, beispielsweise aus EP 0876608 B1 und WO 2011033313 A1.

SPD-Funktionselemente sind im Rahmen der Erfindung besonders bevorzugt. Er hat sich überraschend gezeigt, dass SPD-Funktionselemente ganz besonders effektiv durch eine erfindungsgemäße Infrarot-Schutzbeschichtung vor Alterung geschützt werden können.

Das Funktionselement kann natürlich außer der aktiven Schicht und den Flächenelektroden weitere an sich bekannte Schichten aufweisen, beispielsweise Barriereschichten, Blockerschichten, Antireflexionsschichten, Schutzschichten und / oder Glättungsschichten.

Die Fläche des Funktionselements kann der Fläche der Verbundscheibe entsprechen. Dann wird eine vorteilhafte gleichmäßige Abdunklung der Verbundscheibe durch das schaltbare Funktionselement erreicht. Die Seitenkanten der Verbundscheibe sind dann bevorzugt mit einer geeignet Versiegelung versehen, um das Funktionselement vor Korrosion zu schützen. Die Verbundscheibe kann alternativ aber auch einen umlaufenden Randbereich aufweisen, der nicht mit dem Funktionselement versehen ist, insbesondere wenn dieser Randbereich durch Befestigungselemente, Rahmen oder Aufdrucke abgedeckt ist. Das Funktionselement ist dann vorteilhaft im Inneren der Zwischenschicht vor Korrosion geschützt.

Die innere und / oder die äußere Flächenelektrode sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluor-dotiertes oder Antimon-dotiertes Zinnoxid enthalten. Die Flächenelektroden weisen bevorzugt eine Dicke von 200 nm bis 2 $\mu$m auf.

Die Außenscheibe und / oder die Innenscheibe enthalten bevorzugt nichtvorgespanntes, teilvorgespanntes oder vorgespanntes Glas, besonders bevorzugt Flachglas, Floatglas, Quarzglas, Borosilikatglas, Kalk-Natron-Glas oder klare Kunststoffe, besonders bevorzugt starre klare Kunststoffe, insbesondere Polyethylen, Polypropylen, Polycarbonat, Polymethylmethacrylat, Polystyrol, Polyamid, Polyester, Polyvinylchlorid und / oder Gemische davon. Die Außenscheibe und / oder die Innenscheibe sind können klar und transparent sein und beispielsweise eine Transmission im sichtbaren Spektralbereich von mindestens 70 %, bevorzugt mindestens 85 % aufweisen. Die Außenscheibe und / oder die Innenscheibe können aber auch getönt oder gefärbt sein und beispielsweise eine Transmission im sichtbaren Spektralbereich von 20 % bis 70 % aufweisen.

Die Dicke der Außenscheibe und der Innenscheibe kann breit variieren und so den Erfordernissen im Einzelfall angepasst werden. Die Außenscheibe und / oder die Innenscheibe weisen bevorzugt Dicken von 0,5 mm bis 15 mm, besonders bevorzugt von 1 mm bis 5 mm und ganz besonders bevorzugt von 1,5 mm bis 3 mm auf, beispielsweise 1,6 mm, 1,8 mm oder 2,1 mm.

Die Fläche der erfindungsgemäßen Verbundscheibe kann breit variieren, beispielsweise von 100 cm$^2$ bis 20 m$^2$. Bevorzugt weist die Verbundscheibe eine Fläche von 400 cm$^2$ bis 6 m$^2$ auf, wie sie für Verglasungen von Fahrzeugen und von Bau- und Architekturverglasungen üblich sind. Die Verbundscheibe kann eine beliebige dreidimensionale Form aufweisen. Die Verbundscheibe ist bevorzugt plan oder leicht oder stark in einer Richtung oder in mehreren Richtungen des Raumes gebogen.

Die Außenscheibe, die Innenscheibe und / oder die Folien der Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Wärmestrahlen reflektierende Beschichtungen (Low-E-Beschichtungen).

Die Transmission der erfindungsgemäßen Infrarot-Schutzbeschichtung im sichtbaren Spektralbereich von 400 nm bis 750 nm beträgt bevorzugt größer oder gleich 65 %, besonders bevorzugt größer oder gleich 70 % (insbesondere wenn die Infrarotschutzbeschichtung getempert ist).

Die gemittelte Transmission der erfindungsgemäßen Infrarot-Schutzbeschichtung im infraroten Spektralbereich von 800 nm bis 2000 nm beträgt bevorzugt kleiner oder gleich 10 %, besonders bevorzugt kleiner oder gleich 5 %.

Die gemittelte Transmission der erfindungsgemäßen Infrarot-Schutzbeschichtung im Nahinfrarot-Bereich von 800 nm bis 900 nm beträgt bevorzugt von kleiner oder gleich 15 %, besonders bevorzugt kleiner oder gleich 10 %, ganz besonders bevorzugt kleiner oder gleich 5 % und insbesondere kleiner oder gleich 3 %.

Die Transmission der Infrarot-Schutzbeschichtung kann bestimmt werden, indem die Transmission der mit der Infrarot-Schutzbeschichtung versehenen Substrats (beispielsweise der Außenscheibe oder der beschichteten Folie) gemessen wird und durch die Transmission des unbeschichteten Substrats korrigiert wird. Die Transmission des unbeschichteten Substrats kann an dem gleichen Substrat vor der Beschichtung gemessen werden oder an einem identisch ausgebildeten Substrat.

Die Aufgabe der Erfindung wird weiter durch ein Verfahren zur Herstellung einer erfindungsgemäßen Verbundscheibe mit elektrisch schaltbaren optischen Eigenschaften gelöst, wobei zumindest

a) die Infrarot-Schutzbeschichtung auf eine Oberfläche der ersten Trägerfolie aufgebracht wird,
b) die Zwischenschicht mit dem schaltbaren Funktionselement flächenmäßig zwischen der Außenscheibe und der Innenscheibe angeordnet wird und
c) die Außenscheibe über die Zwischenschicht mit der Innenscheibe verbunden wird.

Die Infrarot-Schutzbeschichtung wird nach Verfahrensschritt (a) in einer vorteilhaften Ausführung auf eine Temperatur von mindestens 200 °C, bevorzugt mindestens 300 °C erwärmt, um die Transmission im sichtbaren Spektralbereich zu verbessern.

Das Aufbringen der Infrarot-Schutzbeschichtung erfolgt durch an sich bekannte Verfahren, bevorzugt durch magnetfeldunterstützte Kathodenzerstäubung. Das ist besonders vorteilhaft im Hinblick auf eine einfache, schnelle, kostengünstige und gleichmäßige Beschichtung des Substrats. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff. Die Infrarot-Schutzbeschichtung kann aber auch durch andere, dem Fachmann bekannte Verfahren aufgebracht werden, beispielsweise durch Aufdampfen oder chemische Gasphasenabscheidung (chemical vapour deposition, CVD), durch plasmagestützte Gasphasenabscheidung (PECVD) oder durch nasschemische Verfahren.

In Verfahrensschritt (b) wird das Funktionselement zwischen mindestens eine erste thermoplastische Klebefolie und mindestens eine zweite thermoplastische Klebefolie eingelegt. Das Funktionselement ist dabei als prälaminiertes Funktionselement zwischen einer ersten und einer zweiten Trägerfolie angeordnet. Das prälaminierte Funktionselement wird hergestellt, indem die erste Trägerfolie, die äußere Flächenelektrode, die aktive Schicht, die innere Flächenelektrode und die zweite Trägerfolie flächenmäßig übereinander angeordnet und unter Einwirkung von Hitze, Vakuum und / oder Druck miteinander verbunden werden.

Die elektrische Kontaktierung der Flächenelektroden erfolgt bevorzugt vor dem Verbinden der Außenscheibe und der Innenscheibe zur Verbundscheibe beziehungsweise vor dem Verbinden der Trägerfolien mit dem Funktionselement.

Verfahrensschritt (c) erfolgt bevorzugt unter Einwirkung von Hitze, Vakuum und / oder Druck. Es können an sich bekannte Verfahren zur Herstellung einer Verbundscheibe verwendet werden, beispielsweise Autoklavverfahren, Vakuumsackverfahren, Vakuumringverfahren, Kalanderverfahren, Vakuumlaminatoren oder Kombinationen davon.

Die erfindungsgemäße Verbundscheibe wird bevorzugt in Gebäuden, insbesondere im Zugangs- oder Fensterbereich oder in Fortbewegungsmitteln für den Verkehr auf dem Lande, in der Luft oder zu Wasser, insbesondere in Zügen, Schiffen und Kraftfahrzeugen beispielsweise als Heckscheibe, Seitenscheibe und / oder Dachscheibe verwendet.

Die erfindungsgemäße Verbundscheibe kann mit einer weiteren Scheibe zu einer Isolierverglasung verbunden sein.

Die Erfindung wird anhand von Figuren und Ausführungsbeispielen näher erläutert. Die Figuren sind schematische Darstellungen und nicht maßstabsgetreu. Die Figuren schränken die Erfindung in keiner Weise ein. Es zeigen:

Fig. 1    einen Querschnitt durch eine erste Ausgestaltung der erfindungsgemäßen Verbundscheibe mit elektrisch schaltbaren optischen Eigenschaften,
Fig. 2    eine vergrößerte Darstellung des Abschnitts Z aus Figur 1,
Fig. 3    einen Querschnitt durch eine weitere Ausgestaltung der erfindungsgemäßen Verbundscheibe,
Fig. 4    einen Querschnitt durch eine weitere Ausgestaltung der erfindungsgemäßen Verbundscheibe,
Fig. 5    die Transmission einer erfindungsgemäßen und einer herkömmlichen Infrarot-Schutzbeschichtung anhand eines Diagramms,
Fig. 6    ein Ausführungsbeispiel des erfindungsgemäßen Verfahrens anhand eines Flussdiagramms
Fig. 7    ein weiteres Ausführungsbeispiel des erfindungsgemäßen Verfahrens anhand eines Flussdiagramms und
Fig. 8    ein weiteres Ausführungsbeispiel des erfindungsgemäßen Verfahrens anhand eines Flussdiagramms.

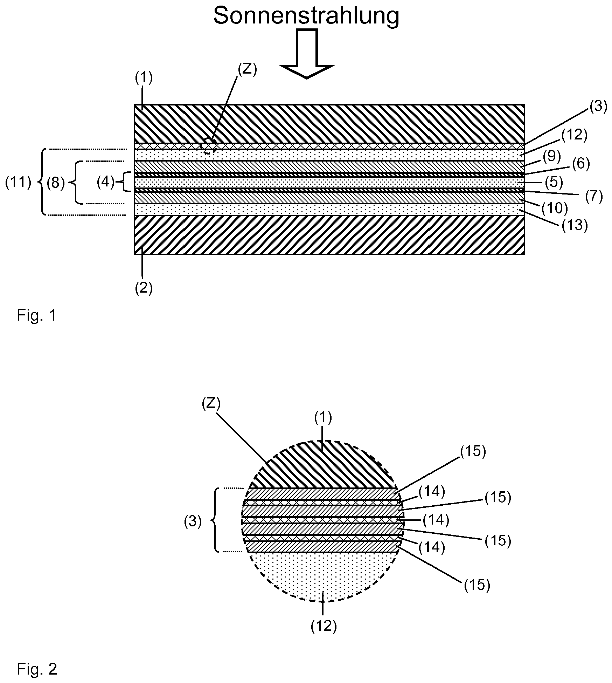

Fig. 1 und Fig. 2 zeigen je ein Detail einer Ausgestaltung einer Verbundscheibe mit elektrisch schaltbaren optischen Eigenschaften. Die Verbundscheibe umfasst eine Außenscheibe 1, die über eine Zwischenschicht 11 mit einer Innenscheibe 2 verbunden ist. Die Verbundscheibe ist als Heckscheibe eines Kraftfahrzeugs vorgesehen und in Einbaulage so angeordnet, dass die Außenscheibe 1 der äußeren Umgebung und die Innenscheibe 2 dem Fahrzeuginnenraum zugewandt ist. Die Außenscheibe 1 und die Innenscheibe 2 bestehen aus Kalk-Natron-Glas und weisen Dicken von 1,6 mm auf.

In die Zwischenschicht 11 ist ein schaltbares Funktionselement 4 eingelagert. Das Funktionselement 4 ist ein SPD-Funktionselement mit einer aktiven Schicht 5 zwischen einer äußeren Flächenelektrode 6 und einer inneren Flächenelektrode 7. Die Flächenelektroden 6, 7 sind über nicht dargestellte Sammelleiter und nicht dargestellte Verbindungskabel mit einer externen Spannungsversorgung verbunden. Die Flächenelektroden 6, 7 bestehen aus Indium-Zinnoxid (ITO) und weisen eine Dicke von unter 1 $\mu$m auf. Die aktive Schicht 5 enthält polarisierte Partikel suspendiert in einem Harz. In Abhängigkeit von der an die Flächenelektroden 6, 7 angelegten Spannung richten sich die suspendierten Partikel entlang einer gemeinsamen Raumrichtung aus. Durch die Ausrichtung der Partikel wird die Absorption von sichtbarem Licht herabgesetzt. Die Transmission von sichtbarem Licht durch die Verbundscheibe kann daher komfortabel elektrisch gesteuert werden.

Das Funktionselement 4 war bei der Herstellung der Verbundscheibe als prälaminiertes Funktionselement 8 bereitgestellt. Das prälaminierte Funktionselement 8 umfasst das Funktionselement 4 zwischen einer ersten Trägerfolie 9 und einer zweiten Trägerfolie 10. Die Trägerfolien 9, 10 bestehen aus Polyethylenterephthalat (PET) und weisen eine Dicke von 0,125 mm auf.

Das prälaminierte Funktionselement 8 ist über eine erste thermoplastische Klebefolie 12 mit der Außenscheibe 1 und über eine zweite thermoplastische Klebefolie 13 mit der Innenscheibe 2 verbunden. Die thermoplastischen Klebefolien 12, 13 bestehen aus Ethylenvinylacetat (EVA) und weisen jeweils eine Dicke von 0,38 mm auf. Die Zwischenschicht 11 umfasst also die erste thermoplastische Klebefolie 12, das prälaminierte Funktionselement 8 (mit der ersten Trägerfolie 9, der äußeren Flächenelektrode 6, der aktiven Schicht 5, der inneren Flächenelektrode 9 und der zweiten Trägerfolie 10) und die zweite thermoplastische Klebefolie 13.

Um eine Beschädigung der aktiven Schicht 5 des Funktionselementes 4 durch infrarote Strahlung zu vermeiden, ist auf der innenseitigen Oberfläche der Außenscheibe 1 eine Infrarot-Schutzbeschichtung 3 aufgebracht. Der infrarote Strahlungsanteil der über die Außenscheibe 1 in die Verbundscheibe eindringenden Sonnenstrahlung wird durch die Infrarot-Schutzbeschichtung 3 reflektiert, bevor er auf die aktive Schicht 5 treffen kann.

Die Infrarot-Schutzbeschichtung 3 umfasst vier dielektrische Schichten 15 und drei funktionelle Schichten 14, die im Wechsel auf die Außenscheibe aufgebracht sind, so dass jede funktionelle Schicht 14 zwischen zwei dielektrischen Schichten 15 angeordnet ist und benachbarte funktionelle Schichten 14 durch jeweils eine dielektrische Schicht 15 voneinander getrennt sind. Die funktionellen Schichten 14 bestehen aus Silber (mit eventuellen herstellungsbedingten Verunreinigungen) und weisen beispielsweise eine Schichtdicke von etwa 15 nm auf. Die dielektrischen Schichten 15 enthalten in der einfachsten Ausgestaltung jeweils eine Einzelschicht eines dielektrischen Materials, beispielsweise Siliziumnitrid. Diejenigen Einzelschichten eines dielektrischen Materials, welche zwischen zwei funktionellen Schichten 14 angeordnet sind, weisen beispielsweise jeweils eine Schichtdicke von etwa 50 nm auf. Die oberste und die unterste Einzelschicht eines dielektrischen Materials weisen beispielsweise jeweils eine Schichtdicke von 25 nm auf. Die dielektrische Schichten 15 können aber auch jeweils zwei oder mehrere Einzelschichten unterschiedlicher Materialen enthalten.

Die erfindungsgemäße Infrarot-Schutzbeschichtung 3 mit den drei funktionellen Schichten 14 weist eine hohe Transmission im sichtbaren Spektralbereich auf. Im Infrarotbereich weist die Infrarot-Schutzbeschichtung 3 einen hohen Reflexionsgrad und eine geringe Transmission auf. Der Reflexionsgrad ist insbesondere im Nah-Infrarotbereich gegenüber einer bekannten Infrarot-Schutzbeschichtung mit nur einer oder zwei funktionellen Schichten deutlich verbessert. Dadurch wird das Funktionselement 4 deutlich effektiver vor Alterung geschützt.

Die Infrarot-Schutzbeschichtung 3 wurde nach dem Aufbringen auf die Außenscheibe 1 einer Temperaturbehandlung unterzogen. Dabei wurde die Außenscheibe 1 mit der Infrarot-Schutzbeschichtung 3 beispielsweise auf mindestens 300°C erhitzt Durch die Temperaturbehandlung wird insbesondere die Kristallinität der funktionellen Schichten 14 verbessert. Dadurch werden die Transmission von sichtbarem Licht und die reflektierenden Eigenschaften gegenüber Infrarotstrahlung deutlich verbessert.

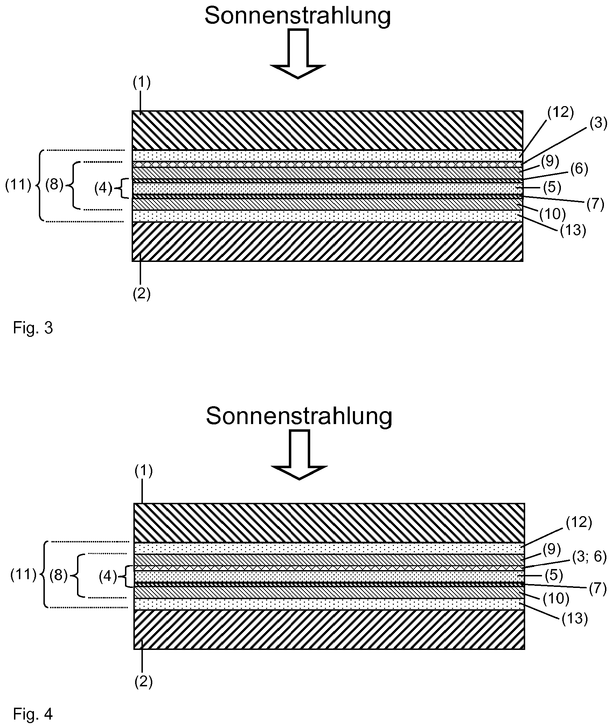

Fig. 3 zeigt einen Querschnitt durch eine weitere Ausgestaltung einer Verbundscheibe mit elektrisch schaltbaren optischen Eigenschaften. Die Außenscheibe 1, die Innenscheibe 2, die thermoplastischen Klebefolien 12, 13, die Trägerfolien 9, 10 und das Funktionselement 4 sind wie in Figur 1 ausgestaltet. Die Infrarot-Schutzbeschichtung 3 ist auf die vom Funktionselement 4 abgewandte Oberfläche der ersten Trägerfolie 9 aufgebracht und somit in der Verbundscheibe zwischen der ersten thermoplastischen Klebefolie 12 und der ersten Trägerfolie 9 angeordnet. Auch durch eine derart positionierte Infrarot-Schutzbeschichtung 3 kann die Alterung der aktiven Schicht 5 wirkungsvoll verhindert werden.

Die Infrarot-Schutzbeschichtung 3 kann alternativ auch auf die erste thermoplastische Klebefolie 12 aufgebracht sein. Es ist alternativ auch möglich, die Infrarot-Schutzbeschichtung 3 auf eine weitere Folie aufzubringen, welche bei der Herstellung der Verbundscheibe zwischen die erste thermoplastische Klebefolie 12 und die Trägerfolie 9 eingelegt wird.

Fig. 4 zeigt einen Querschnitt durch eine Ausgestaltung der erfindungsgemäßen Verbundscheibe mit elektrisch schaltbaren optischen Eigenschaften. Die Infrarot-Schutzbeschichtung 3 ist auf der zur aktiven Schicht 5 hingewandten Oberfläche der ersten Trägerfolie 9 aufgebracht. Die Infrarot-Schutzbeschichtung 3, die selbst elektrisch leitfähig ist, dient gleichzeitig als äußere Flächenelektrode 6. Dadurch ist die Herstellung der Verbundscheibe vereinfacht. Die Infrarot-Schutzbeschichtung 3 ist dazu über einen nicht dargestellten Sammelleiter und ein Verbindungskabel mit der externen Spannungsversorgung verbunden. Die Infrarot-Schutzbeschichtung 3 ist zudem im Inneren des prälaminierten Funktionselements 8 vorteilhaft vor Korrosion und sonstiger Beschädigung geschützt. Das prälaminierte Funktionselement 8 mit der integrierten Infrarot-Schutzbeschichtung 3 kann daher zeitlich vor der Herstellung der Verbundscheibe in größerer Stückzahl bereitgestellt werden.

Alternativ kann natürlich auf die Infrarot-Schutzbeschichtung 3 eine weitere Schicht beispielsweise aus Indium-Zinnoxid als äußere Flächenelektrode 6 aufgebracht sein.

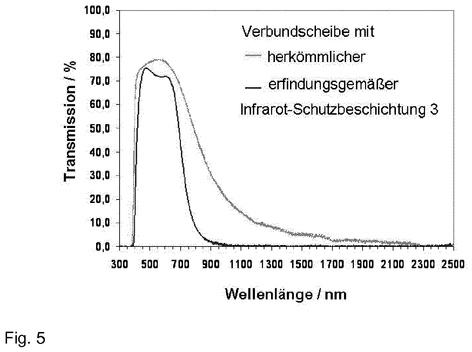

Fig. 5 zeigt ein Diagramm der Transmission durch eine Verbundscheibe mit einer erfindungsgemäßen Infrarot-Schutzbeschichtung 3. Die Infrarot-Schutzbeschichtung 3 war auf die innenseitige Oberfläche der Außenscheibe 1 aufgebracht und umfasste drei funktionelle Schichten 14 aus Silber. Die Infrarot-Schutzbeschichtung 3 war getempert. Das Diagramm zeigt weiter die Transmission durch eine Verbundscheibe mit einer herkömmlichen Infrarot-Schutzbeschichtung, welche nur zwei funktionelle Schichten aus Silber enthielt und die auf einer weiteren in die Zwischenschicht eingelegten thermoplastischen Folie aus PET aufgebracht war. Zum besseren Vergleich der Transmissionen der Infrarot-Schutzbeschichtungen wiesen die Verbundscheiben kein Funktionselement 4 auf. Es ist deutlich zu erkennen, dass die erfindungsgemäße Infrarot-Schutzbeschichtung 3 eine geringere Transmission im infraroten Strahlungsbereich aufweist, insbesondere auch im Nah-Infrarotbereich. Ein Funktionselement 4 wird daher durch eine erfindungsgemäße Infrarot-Schutzbeschichtung 3 besser vor Alterung durch Infrarotstrahlung geschützt.

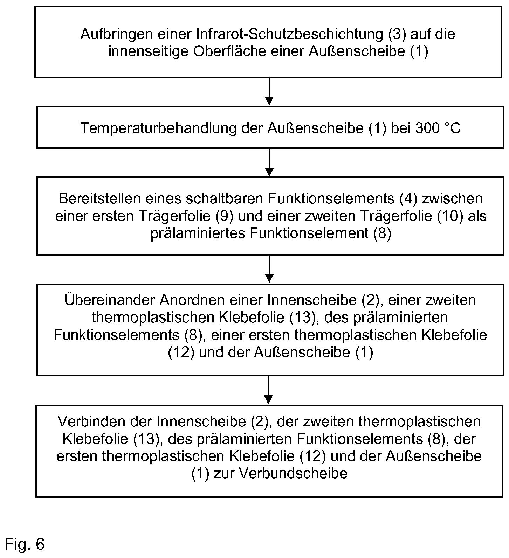

Fig. 6 zeigt ein Ausführungsbeispiel eines Verfahrens zur Herstellung einer Verbundscheibe mit elektrisch schaltbaren optischen Eigenschaften. Das Ausführungsbeispiel führt zu einer Verbundscheibe nach Fig. 1. Zunächst wird eine Infrarot-Schutzbeschichtung 3 auf die innenseitige Oberfläche der Außenscheibe 1 aufgebracht. Anschließend wird die beschichtete Außenscheibe 1 einer Temperaturbehandlung bei 300°C unterzogen. Das schaltbare Funktionselement 4 enthält eine aktive Schicht 5 zwischen einer äußeren Flächenelektrode 6 und einer inneren Flächenelektrode 7. Das schaltbare Funktionselement 4 wird als prälaminiertes Funktionselement 8 zwischen einer ersten Trägerfolie 9 und einer zweiten Trägerfolie 10 bereitgestellt. Eine Innenscheibe 2, eine zweite thermoplastische Klebefolie 13, das prälaminierte Funktionselement 8, eine erste thermoplastischen Klebefolie 12 und die Außenscheibe 1 werden in der angegebenen Reihenfolge flächenmäßig übereinander angeordnet und anschließend unter Einwirkung von Temperatur, Druck und / oder Vakuum zur Verbundscheibe laminiert.

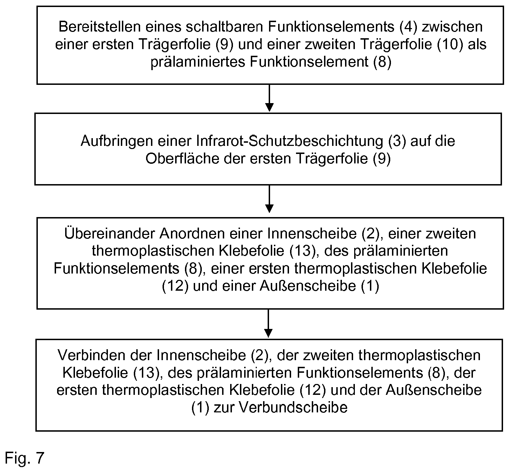

Fig. 7 zeigt ein Ausführungsbeispiel eines Verfahrens zur Herstellung einer Verbundscheibe mit elektrisch schaltbaren optischen Eigenschaften. Das Ausführungsbeispiel führt zu einer Verbundscheibe nach Fig. 3. Das schaltbare Funktionselement 4 enthält eine aktive Schicht 5 zwischen einer äußeren Flächenelektrode 6 und einer inneren Flächenelektrode 7. Das schaltbare Funktionselement 4 wird als prälaminiertes Funktionselement 8 zwischen einer ersten Trägerfolie 9 und einer zweiten Trägerfolie 10 bereitgestellt. Auf die vom Funktionselement 4 abgewandte Oberfläche der ersten Trägerfolie 9 wird eine Infrarot-Schutzbeschichtung 3 aufgebracht. Eine Innenscheibe 2, eine zweite thermoplastische Klebefolie 13, das prälaminierte Funktionselement 8, eine erste thermoplastischen Klebefolie 12 und eine Außenscheibe 1 werden in der angegebenen Reihenfolge flächenmäßig übereinander angeordnet und anschließend unter Einwirkung von Temperatur, Druck und / oder Vakuum zur Verbundscheibe laminiert.

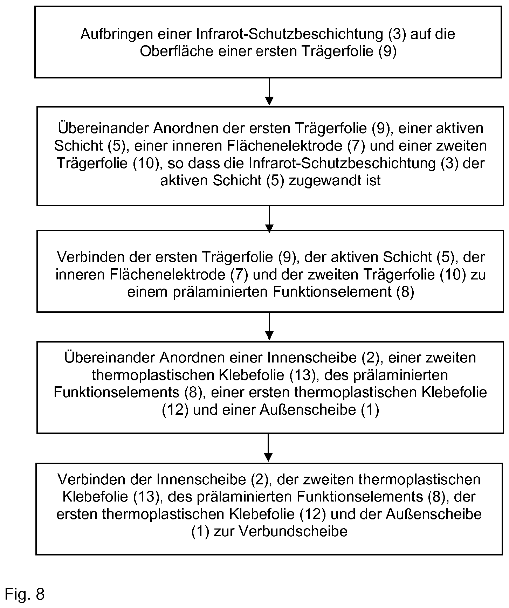

Fig. 8 zeigt ein Ausführungsbeispiel des erfindungsgemäßen Verfahrens zur Herstellung einer Verbundscheibe mit elektrisch schaltbaren optischen Eigenschaften. Das Ausführungsbeispiel führt zu einer erfindungsgemäßen Verbundscheibe nach Fig. 4. Zunächst wird eine Infrarot-Schutzbeschichtung 3 auf die Oberfläche einer ersten Trägerfolie 9 aufgebracht. Die erste Trägerfolie 9, eine aktive Schicht 5, eine innere Flächenelektrode 7 und eine zweite Trägerfolie 10 werden in der angegebenen Reihenfolge flächenmäßig übereinander angeordnet, so dass die Infrarot-Schutzbeschichtung 3 der aktiven Schicht 5 zugewandt. Die Infrarot-Schutzbeschichtung 3 dient als äußere Flächenelektrode 6 wird dazu geeignet elektrisch kontaktiert. Die erste Trägerfolie 9 mit der Infrarot-Schutzbeschichtung 3, die aktive Schicht 5, die innere Flächenelektrode 7 und die zweite Trägerfolie 10 werden unter Einwirkung von Temperatur, Druck und / oder Vakuum zu einem prälaminierten Funktionselement 8 verbunden. Anschließend werden eine Innenscheibe 2, eine zweite thermoplastische Klebefolie 13, das prälaminierte Funktionselements 8, eine zweite thermoplastische Klebefolie 12 und eine Außenscheibe 1 in der angegebenen Reihenfolge flächenmäßig übereinander angeordnet und danach unter Einwirkung von Temperatur, Druck und / oder Vakuum zur Verbundscheibe laminiert. Beispiel

Es wurde eine Verbundscheibe mit elektrisch schaltbaren optischen Eigenschaften gemäß der Figur 1 hergestellt. Die Infrarot-Schutzbeschichtung 3 wurde nach dem Aufbringen auf die innenseitige Oberfläche der Außenscheibe 1 einer Temperaturbehandlung unterzogen. Dazu wurde die beschichtete Außenscheibe 1 für 7 Minuten auf eine Temperatur von 640 °C erhitzt. Anschließend wurde die Außenscheibe 1 mit der Infrarot-Schutzbeschichtung 3, das prälaminierte Funktionselement 8 und die Innenscheibe 2 über die erste thermoplastische Klebefolie 12 und die zweite thermoplastische Klebefolie 13 bei einer Temperatur von etwa 120°C und einem Druck von etwa 2 bar zur Verbundscheibe laminiert.

Die Verbundscheibe wurde einem standardisierten Weatherometer (WOM)-Test unterzogen. Dabei wurde die Verbundscheibe für 800 Stunden mit einer Xenon-Bogenlampe bestrahlt, deren Strahlung das Sonnenspektrum simuliert. Die Außenscheibe 1 war dabei zur Lichtquelle hingewandt angeordnet. Nach der Bestrahlung wurde der Wert ΔE bestimmt, welcher in Tabelle 1 aufgeführt ist. Der Wert ΔE gibt die Helligkeits- und Farbänderungen der Verbundscheibe durch den WOM-Test an. Er berechnet sich nach:

$$\Delta E = \sqrt{\left(\frac{\Delta L*}{2}\right)^2 + \Delta a*^2 + \Delta b*^2}$$

L* ist hierbei der Helligkeitswert, a* und b* die Farbkoordinaten im L*a*b*-Farbraum. Δ bezeichnet die Differenz der jeweiligen Größe vor und nach dem WOM-Test.

Vergleichsbeispiel 1

Das Vergleichsbeispiel 1 wurde genauso durchgeführt wie das Beispiel. Der Unterschied lag in der Infrarot-Schutzbeschichtung 3. Die Infrarot-Schutzbeschichtung 3 umfasste nach dem Stand der Technik nur zwei funktionelle Schichten aus Silber. Die Infrarot-Schutzbeschichtung 3 war zudem nicht auf der Außenscheibe 1 aufgebracht, sondern auf einer weiteren thermoplastischen Folie aus PET, welche zwischen der ersten thermoplastischen Klebeschicht 12 und dem prälaminierten Funktionselement 8 in den Verbund eingelegt war (Southwall XIR-75 PET). Die Verbundscheibe wurde demselben WOM-Test unterzogen. Der anschließend ermittelte Wert ΔE ist in Tabelle 1 aufgeführt.

Vergleichsbeispiel 2

Das Vergleichsbeispiel 2 wurde genauso durchgeführt wie das Beispiel. Im Unterschied zum Beispiel wies die Verbundscheibe allerdings keine Infrarot-Schutzbeschichtung 3 auf. Die Verbundscheibe wurde demselben WOM-Test unterzogen. Der anschließend ermittelte Wert ΔE ist in Tabelle 1 aufgeführt.

Tabelle 1

|  | Beispiel | Vergleichsbeispiel 1 | Vergleichsbeispiel 2 |
|---|---|---|---|
| ΔE | 2,4 | 4,1 | 4,8 |

Aus der Tabelle 1 ist ersichtlich, dass die erfindungsgemäße Infrarot-Schutzbeschichtung 3 zu einer deutlich verringerten Alterung des Funktionselements 4 führt. Der Schutz des Funktionselements 4 ist gegenüber einer Verbundscheibe mit einer herkömmlichen Infrarot-Schutzbeschichtung deutlich verbessert. Dieses Ergebnis war für den Fachmann unerwartet und überraschend.

Bezugszeichenliste:

(1)    Außenscheibe
(2)    Innenscheibe
(3)    Infrarot-Schutzbeschichtung
(4)    schaltbares Funktionselement
(5)    aktive Schicht des Funktionselements 4
(6)    äußere Flächenelektrode des Funktionselements 4
(7)    innere Flächenelektrode des Funktionselements 4
(8)    prälaminiertes Funktionselement
(9)    erste Trägerfolie des prälaminierten Funktionselements 8
(10)   zweite Trägerfolie des prälaminierten Funktionselements 8
(11)   Zwischenschicht
(12)   erste thermoplastische Klebefolie
(13)   zweite thermoplastische Klebefolie
(14)   funktionelle Schicht mit reflektierenden Eigenschaften im Infrarotbereich

(15)    dielektrische Schicht

Z    Abschnitt der Verbundscheibe

**Patentansprüche**

**1.** Verbundscheibe mit elektrisch schaltbaren optischen Eigenschaften, mindestens umfassend:

- eine Außenscheibe (1) und eine Innenscheibe (2), die über eine Zwischenschicht (11) flächenmäßig miteinander verbunden sind,
- innerhalb der Zwischenschicht (11) ein schaltbares Funktionselement (4) mit mindestens einer aktiven Schicht (5), wobei das Funktionselement (4) eine äußere Flächenelektrode (6) und eine innere Flächenelektrode (7) enthält, zwischen denen die aktive Schicht (5) flächenmäßig angeordnet ist, und wobei das Funktionselement (4) flächenmäßig zwischen einer ersten Trägerfolie (9) und einer zweiten Trägerfolie (10) angeordnet ist und wobei die erste Trägerfolie (9) zumindest über eine erste thermoplastische Klebefolie (12) mit der Außenscheibe (1) und die zweite Trägerfolie (10) über zumindest eine zweite thermoplastische Klebefolie (13) mit der Innenscheibe (2) verbunden ist, und
- eine Infrarot-Schutzbeschichtung (3), flächenmäßig zwischen der Außenscheibe (1) und der aktiven Schicht (5) angeordnet, wobei die Infrarot-Schutzbeschichtung (3) auf der zur aktiven Schicht (5) hingewandten Oberfläche der ersten Trägerfolie (9) aufgebracht ist und die äußere Flächenelektrode (6) ist, und wobei die Infrarot-Schutzbeschichtung (3) mindestens drei funktionelle Schichten (14) mit reflektierenden Eigenschaften für den Infrarotbereich enthält,

wobei das Funktionselement (4) ein vorgefertigtes, prälaminiertes Funktionselement (8) ist, und
wobei die Verbundscheibe einen Randbereich aufweist, der nicht mit der Infrarot-Schutzbeschichtung versehen ist.

**2.** Verbundscheibe nach Anspruch 1, wobei das Funktionselement (4) ein SPD-Funktionselement ist.

**3.** Verbundscheibe nach einem der Ansprüche 1 bis 2, wobei die funktionellen Schichten (14) zumindest ein Metall, bevorzugt Silber enthalten.

**4.** Verbundscheibe nach einem der Ansprüche 1 bis 3, wobei jede funktionelle Schicht (14) eine Dicke von 5 nm bis 50 nm, bevorzugt von 8 nm bis 25 nm aufweist.

**5.** Verbundscheibe nach einem der Ansprüche 1 bis 4, wobei jede funktionelle Schicht (14) zwischen zwei dielektrischen Schichten (15) angeordnet ist, welche zumindest ein Oxid oder ein Nitrid, bevorzugt Siliziumnitrid, enthalten.

**6.** Verbundscheibe nach einem der Ansprüche 1 bis 5, wobei die Außenscheibe (1) und/oder die Innenscheibe (2) nichtvorgespanntes, teilvorgespanntes oder vorgespanntes Glas, bevorzugt Flachglas, Floatglas, Quarzglas, Borosilikatglas, Kalk-Natron-Glas oder klare Kunststoffe, bevorzugt starre klare Kunststoffe, insbesondere Polyethylen, Polypropylen, Polycarbonat, Polymethylmethacrylat, Polystyrol, Polyamid, Polyester, Polyvinylchlorid und / oder Gemische davon enthalten und bevorzugt eine Dicke von 0,5 mm bis 15 mm, besonders bevorzugt von 1 mm bis 5 mm aufweisen.

**7.** Verbundscheibe nach einem der Ansprüche 1 bis 6, wobei die gemittelte Transmission der Infrarot-Schutzbeschichtung (3) im Spektralbereich von 800 nm bis 900 nm kleiner oder gleich 15 %, bevorzugt kleiner oder gleich 10 % beträgt.

**8.** Verfahren zur Herstellung einer Verbundscheibe nach einem der Ansprüche 1 bis 7, wobei zumindest

a) die Infrarot-Schutzbeschichtung (3) auf eine Oberfläche der ersten Trägerfolie (9) aufgebracht wird,
b) die Zwischenschicht (11) mit dem schaltbaren Funktionselement (4) flächenmäßig zwischen der Außenscheibe (1) und der Innenscheibe (2) angeordnet wird und
c) die Außenscheibe (1) über die Zwischenschicht (11) mit der Innenscheibe (2) verbunden wird.

**9.** Verfahren nach Anspruch 8, wobei die Infrarot-Schutzbeschichtung (3) nach Verfahrensschritt (a) auf eine Temperatur von mindestens 200 °C erwärmt wird.

**Claims**

1. Composite pane with electrically switchable optical properties, at least comprising:

   - an outer pane (1) and an inner pane (2), which are laminarily bonded to one another via an intermediate layer (11),
   - inside the intermediate layer (11), a switchable functional element (4) with at least one active layer (5), wherein the functional element (4) contains an outer plate electrode (6) and an inner plate electrode (7), between which the active layer (5) is laminarily arranged, and wherein the functional element (4) is laminarily arranged between a first carrier film (9) and a second carrier film (10) and wherein the first carrier film (9) is bonded to the outer pane (1) at least via one first thermoplastic adhesive film (12) and the second carrier film (10) is bonded to the inner pane (2) via at least one second thermoplastic adhesive film (13), and
   - an infrared protective coating (3) laminarily arranged between the outer pane (1) and the active layer (5), wherein the infrared protective coating (3) is applied on the surface of the first carrier film (9) facing the active layer (5) and is the outer plate electrode (6), and wherein the infrared protective coating (3) contains at least three functional layers (14) with reflecting properties for the infrared range,

   wherein the functional element (4) is a pre-fabricated, pre-laminated functional element (8), and
   wherein the composite pane has an edge region that is not provided with the infrared protective coating.

2. Composite pane according to claim 1, wherein the functional element (4) is an SPD functional element.

3. Composite pane according to one of claims 1 through 2, wherein the functional layers (14) contain at least one metal, preferably silver.

4. Composite pane according to one of claims 1 through 3, wherein each functional layer (14) has a thickness from 5 nm to 50 nm, preferably from 8 nm to 25 nm.

5. Composite pane according to one of claims 1 through 4, wherein each functional layer (14) is arranged between two dielectric layers (15), which contain at least one oxide or one nitride, preferably silicon nitride.

6. Composite pane according to one of claims 1 through 5, wherein the outer pane (1) and/or the inner pane (2) contain non-prestressed, partially prestressed, or prestressed glass, preferably flat glass, float glass, quartz glass, borosilicate glass, soda lime glass, or clear plastics, preferably rigid clear plastics, in particular polyethylene, polypropylene, polycarbonate, polymethyl methacrylate, polystyrene, polyamide, polyester, polyvinyl chloride, and / or mixtures thereof and preferably have a thickness from 0.5 mm to 15 mm, particularly preferably from 1 mm to 5 mm.

7. Composite pane according to one of claims 1 through 6, wherein the averaged transmittance of the infrared protective coating (3) in the spectral range from 800 nm to 900 nm is less than or equal to 15%, preferably less than or equal to 10%.

8. Method for producing a composite pane according to one of claims 1 through 7, wherein at least

   a) the infrared protective coating (3) is applied on a surface of the first carrier film (9),
   b) the intermediate layer (11) with the switchable functional element (4) is laminarily arranged between the outer pane (1) and the inner pane (2), and
   c) the outer pane (1) is bonded to the inner pane (2) via the intermediate layer (11).

9. Method according to claim 8, wherein the infrared protective coating (3) is heated after process step (a) to a temperature of at least 200 °C.

**Revendications**

1. Vitre composite à propriétés optiques électriquement commutables, comprenant au moins :

   - une vitre extérieure (1) et une vitre intérieure (2), qui sont collées l'une à l'autre par laminage via une couche intermédiaire (11),

- à l'intérieur de la couche intermédiaire (11), un élément fonctionnel commutable (4) avec au moins une couche active (5), dans lequel l'élément fonctionnel (4) contient une électrode plate extérieure (6) et une électrode plate intérieure (7), entre lesquelles la couche active (5) est disposée de manière stratifiée, et dans lequel l'élément fonctionnel (4) est disposé de manière stratifiée entre un premier film de support (9) et un second film de support (10) et dans lequel le premier film de support (9) est collé à la vitre extérieure (1) au moins par l'intermédiaire d'un premier film adhésif thermoplastique (12) et le second film de support (10) est collé à la vitre intérieure (2) par l'intermédiaire d'au moins un second film adhésif thermoplastique (13), et
- un revêtement de protection contre les infrarouges (3) disposé de manière stratifiée entre la vitre extérieure (1) et la couche active (5), dans lequel le revêtement de protection contre les infrarouges (3) est appliqué sur la surface du premier film de support (9) tournée vers la couche active (5) et est l'électrode de plaque extérieure (6), et dans lequel le revêtement de protection contre les infrarouges (3) contient au moins trois couches fonctionnelles (14) ayant des propriétés de réflexion pour la plage infrarouge,

dans lequel l'élément fonctionnel (4) est un élément fonctionnel pré-fabriqué et pré-laminé (8), et
dans lequel la vitre composite a une région de bord qui n'est pas pourvue du revêtement de protection contre les infrarouges.

2. Vitre composite selon la revendication 1, dans laquelle l'élément fonctionnel (4) est un élément fonctionnel SPD.

3. Vitre composite selon l'une des revendications 1 à 2, dans laquelle les couches fonctionnelles (14) contiennent au moins un métal, de préférence de l'argent.

4. Vitre composite selon l'une des revendications 1 à 3, dans laquelle chaque couche fonctionnelle (14) a une épaisseur comprise entre 5 nm et 50 nm, de préférence entre 8 nm et 25 nm.

5. Vitre composite selon l'une des revendications 1 à 4, dans laquelle chaque couche fonctionnelle (14) est disposée entre deux couches diélectriques (15), qui contiennent au moins un oxyde ou un nitrure, de préférence du nitrure de silicium.

6. Vitre composite selon l'une des revendications 1 à 5, dans laquelle la vitre extérieure (1) et/ou la vitre intérieure (2) contiennent du verre non précontraint, partiellement précontraint ou précontraint, de préférence du verre plat, du verre flotté, du verre de quartz, du verre borosilicaté, du verre sodocalcique, ou des matières plastiques transparentes, de préférence des matières plastiques transparentes rigides, en particulier du polyéthylène, du polypropylène, du polycarbonate, du polyméthacrylate de méthyle, du polystyrène, du polyamide, du polyester, du chlorure de polyvinyle, et/ou des mélanges de ceux-ci, et présentent de préférence une épaisseur de 0,5 mm à 15 mm, de manière particulièrement préférée. 5 mm à 15 mm, de préférence de 1 mm à 5 mm.

7. Vitre composite selon l'une des revendications 1 à 6, dans laquelle la transmittance moyenne du revêtement protecteur infrarouge (3) dans la gamme spectrale de 800 nm à 900 nm est inférieure ou égale à 15%, de préférence inférieure ou égale à 10%.

8. Procédé de fabrication d'une vitre composite selon l'une des revendications 1 à 7, dans lequel au moins.

a) le revêtement de protection infrarouge (3) est appliqué sur une surface du premier film support (9),
b) la couche intermédiaire (11) avec l'élément fonctionnel commutable (4) est disposée de manière stratifiée entre la vitre extérieure (1) et la vitre intérieure (2), et
c) la vitre extérieure (1) est collée à la vitre intérieure (2) par l'intermédiaire de la couche intermédiaire (11).

9. Procédé selon la revendication 8, dans lequel le revêtement de protection contre les infrarouges (3) est chauffé après l'étape de traitement (a) à une température d'au moins 200 °C.

Sonnenstrahlung

Fig. 1

Fig. 2

Sonnenstrahlung

(1)

(12)
(3)
(9)
(6)
(5)
(7)
(10)
(13)

(11) (8) (4)

(2)

Fig. 3

Sonnenstrahlung

(1)

(12)
(9)
(3; 6)
(5)
(7)
(10)
(13)

(11) (8) (4)

(2)

Fig. 4

Fig. 5

16

Aufbringen einer Infrarot-Schutzbeschichtung (3) auf die innenseitige Oberfläche einer Außenscheibe (1)

↓

Temperaturbehandlung der Außenscheibe (1) bei 300 °C

↓

Bereitstellen eines schaltbaren Funktionselements (4) zwischen einer ersten Trägerfolie (9) und einer zweiten Trägerfolie (10) als prälaminiertes Funktionselement (8)

↓

Übereinander Anordnen einer Innenscheibe (2), einer zweiten thermoplastischen Klebefolie (13), des prälaminierten Funktionselements (8), einer ersten thermoplastischen Klebefolie (12) und der Außenscheibe (1)

↓

Verbinden der Innenscheibe (2), der zweiten thermoplastischen Klebefolie (13), des prälaminierten Funktionselements (8), der ersten thermoplastischen Klebefolie (12) und der Außenscheibe (1) zur Verbundscheibe

Fig. 6

Bereitstellen eines schaltbaren Funktionselements (4) zwischen einer ersten Trägerfolie (9) und einer zweiten Trägerfolie (10) als prälaminiertes Funktionselement (8)

Aufbringen einer Infrarot-Schutzbeschichtung (3) auf die Oberfläche der ersten Trägerfolie (9)

Übereinander Anordnen einer Innenscheibe (2), einer zweiten thermoplastischen Klebefolie (13), des prälaminierten Funktionselements (8), einer ersten thermoplastischen Klebefolie (12) und einer Außenscheibe (1)

Verbinden der Innenscheibe (2), der zweiten thermoplastischen Klebefolie (13), des prälaminierten Funktionselements (8), der ersten thermoplastischen Klebefolie (12) und der Außenscheibe (1) zur Verbundscheibe

Fig. 7

Aufbringen einer Infrarot-Schutzbeschichtung (3) auf die
Oberfläche einer ersten Trägerfolie (9)

↓

Übereinander Anordnen der ersten Trägerfolie (9), einer aktiven
Schicht (5), einer inneren Flächenelektrode (7) und einer zweiten
Trägerfolie (10), so dass die Infrarot-Schutzbeschichtung (3) der
aktiven Schicht (5) zugewandt ist

↓

Verbinden der ersten Trägerfolie (9), der aktiven Schicht (5), der
inneren Flächenelektrode (7) und der zweiten Trägerfolie (10) zu
einem prälaminierten Funktionselement (8)

↓

Übereinander Anordnen einer Innenscheibe (2), einer zweiten
thermoplastischen Klebefolie (13), des prälaminierten
Funktionselements (8), einer ersten thermoplastischen Klebefolie
(12) und einer Außenscheibe (1)

↓

Verbinden der Innenscheibe (2), der zweiten thermoplastischen
Klebefolie (13), des prälaminierten Funktionselements (8), der
ersten thermoplastischen Klebefolie (12) und der Außenscheibe
(1) zur Verbundscheibe

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120026573 A1
- WO 2012007334 A1
- EP 0876608 B1
- WO 2011033313 A1
- WO 2007122426 A1
- WO 2009061329 A
- WO 2012154663 A
- US 5408353 A
- WO 2010147494 A1
- EP 1862849 A1
- DE 102008026339 A1
- US 2004227462 A1
- WO 2010112789 A2